# EUROPEAN PATENT SPECIFICATION

(11) **EP 3 702 226 B1**
(45) Date of publication and mention of the grant of the patent: **14.12.2022**
(21) Application number: 20159509.7
(22) Date of filing: 26.02.2020
(51) Int. Cl.: B60T 1/04, B60T 17/08, B61H 1/00, B61H 13/00, F16D 49/00

(54) **RAILCAR BRAKING DEVICE AND RAILCAR UNIT BRAKE**
ZUGBREMSVORRICHTUNG UND ZUGBREMSE
DISPOSITIF DE FREINAGE DE VOITURE FERROVIAIRE, ET FREIN ASSOCIÉ

(30) Priority: 26.02.2019 JP 2019032899
(43) Date of publication of application: 02.09.2020
(73) Proprietor: Nabtesco Corporation, Tokyo 102-0093 (JP)
(72) Inventor: ASANO, Yoshio, Chiyoda-ku, Tokyo 102-0093 (JP); OOIE, Hideyuki, Chiyoda-ku, Tokyo 102-0093 (JP); YOSHIMURA, Tadashi, Chiyoda-ku, Tokyo 102-0093 (JP)
(74) Representative: Grünecker Patent- und Rechtsanwälte PartG mbB

(56) References cited:
- WO-A1-2013/014862
- DE-C- 692 961
- DE-C- 937 596
- GB-A- 916 878

## Description

The present invention relates to a railcar braking device according to the preamble of independent claim 1. Such a railcar braking device can be taken from the prior art document WO 2013/014862 A1.

A unit brake provided with a regular brake used in a normal operation and a parking brake used to hold the car for a long period of time is known as a railcar braking device. For example, WO 2013/014862 A1 discloses a unit brake provided with an air brake part that exhibits a normal brake function, a spring brake part that exhibits a parking brake function, and a brake lever swiveled by a force generated by the air brake part and the spring brake part and applying a braking force to the wheels.

In the unit brake of WO 2013/014862 A1, the air brake part displaces the first piston by supplying compressed air to the first pressure chamber, thereby generating a force originating the braking force. The spring brake part displaces the second piston by discharging compressed air from the second pressure chamber to generate a biasing force of the spring, thereby generating a force originating the braking force. The forces generated by these brake parts are input to the point of effort of the brake lever. A shoe head provided with a brake shoe is coupled to the point of action of the brake lever. The swiveling motion of the brake lever presses the brake shoe against the wheels, applying the braking force to the wheels.

Prior art document DE 692961 C discloses a railcar braking device with a brake lever having a point of effort in which a force is input and a point of action that produces a braking force in a member subject to braking, the point of effort going through a first displacement and a second displacement in the stated order when a braking force is generated; and a magnification ratio modulator that configures a magnification ratio of a displacement at the point of action relative to the first displacement at the point of effort to be larger than a magnification ratio of a displacement at the point of action relative to the second displacement at the point of effort. The brake lever includes a first displaceable member displaced in response to the force; and a second displaceable member separate from the first displaceable member and displaced in response to a displacement of the first displaceable member.

From the perspectives of reducing the installation space and making the installation job easy, it is desired that the size of the railcar braking device described above be reduced. Our study has shown that there is room for further reduction in the size of the railcar braking device according to the related art.

It is the object of the present invention to provide a railcar braking device that can be reduced in size.

According to the present invention said object is solved by railcar braking device having the features of independent claim 1.

Preferred embodiments are laid down in the dependent claims.

An embodiment relates to a railcar unit brake. The railcar unit brake includes: a brake lever that has a point of effort in which a force is input and a point of action that generates a braking force in a member subject to braking and that undergoes a first displacement and a second displacement in a stated order at the point of effort when the braking force is generated; a magnification ratio modulator that configures a magnification ratio of a displacement at the point of action relative to the first displacement at the point of effort to be larger than a magnification ratio of a displacement at the point of action relative to the second displacement at the point of effort; a brake cylinder that includes an air brake part and a spring brake part and that independently generates a braking force directed to a purpose of decelerating a car while the car is traveling by means of the air brake part and a braking force for maintaining a parked state of the car being parked by means of the spring brake part, the air brake part using a pressure of air supplied to a first chamber to displace a first piston and inputting a force to the point of effort of the brake lever, and the spring brake part using a biasing force of a spring generated by releasing a pressure of air supplied to a second chamber to displace a second piston provided coaxially with the first piston and inputting a force to the point of effort of the brake lever; and a shoe head that is coupled to the point of action of the brake lever and is displaced by a force transmitted from the brake lever to press the brake shoe against the member subject to braking.

Optional combinations of the aforementioned constituting elements, and replacement of constituting elements or implementations of the present invention in the form of methods, devices, programs, transitory or non-transitory recording mediums storing programs, and systems may also be practiced as optional modes of the present invention.
Fig. 1 is cross-sectional view of a railcar braking device according to embodiment 1;
Fig. 2 is a cross-sectional view showing a broken line area A of Fig. 1 on an enlarged scale;
Fig. 3 is a cross-sectional view of the railcar braking device in the regular brake state;
Fig. 4 is a cross-sectional view of the railcar braking device in the parking brake state;
Fig. 5 is a cross-sectional view of the railcar braking device in the manually opened parking brake state;
Fig. 6 is cross-sectional view of a railcar braking device according to embodiment 2;
Fig. 7 is cross-sectional view of a railcar braking device according to embodiment 3;
Fig. 8 is cross-sectional view of a railcar braking device according to embodiment 4; and
Fig. 9 is cross-sectional view of a railcar braking device according to embodiment 5.

A description will be given of the present invention based on suitable embodiments with reference to the drawings. The embodiments do not intend to limit the scope of the invention but exemplify the invention. Not all of the features and the combinations thereof described in the embodiments are necessarily essential to the invention. Like numerals are used to represent like elements, members, and processes and a description will be omitted as appropriate. The scales and shapes shown in the figures are defined for convenience's sake to make the explanation easy and shall not be interpreted limitatively unless otherwise specified.

Terms like "first", "second", etc. used in the specification and claims do not indicate an order or importance by any means unless specified otherwise and are used to distinguish a certain feature from the others. Those of the members that are not material to the description of the embodiments are omitted in the drawings.

### (Embodiment 1)

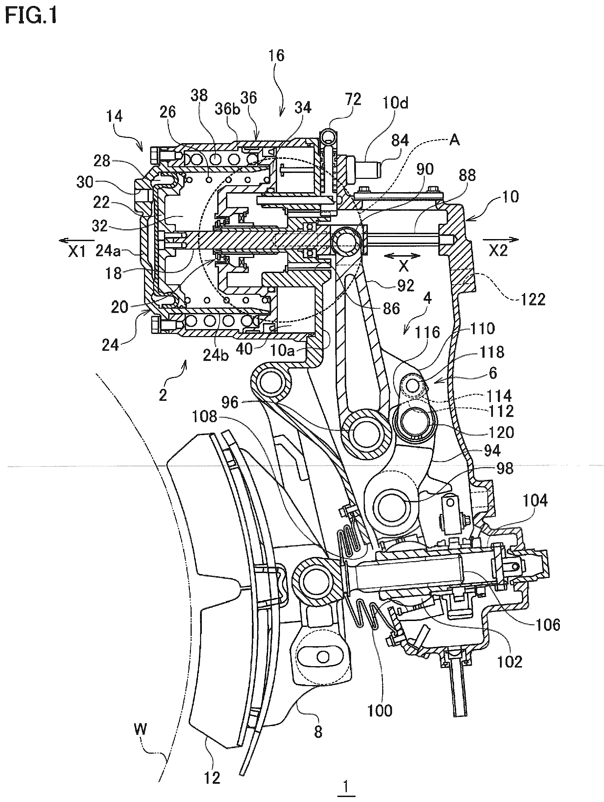

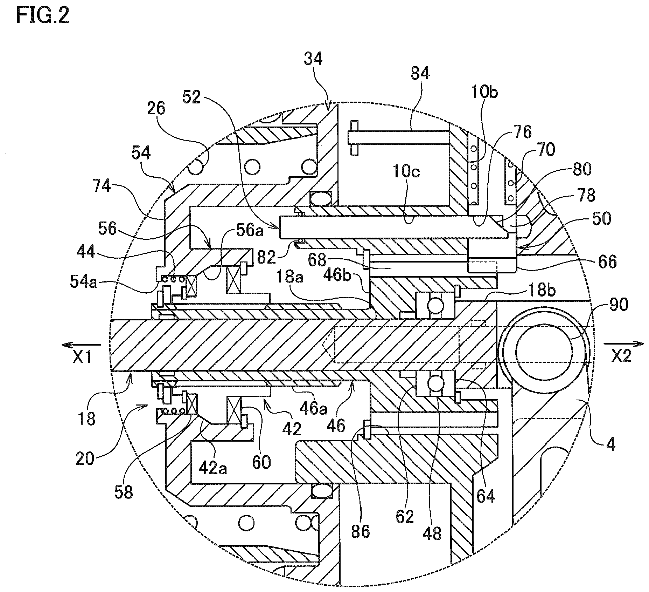

Fig. 1 is cross-sectional view of a railcar braking device according to embodiment 1. Fig. 2 is a cross-sectional view showing a broken line area A of Fig. 1 on an enlarged scale. Figs. 1 and 2 show the railcar braking device in a state in which neither of the air brake part and the spring brake part applies a braking force to a member subject to braking, i.e., in a reduced braking state.

The railcar braking device 1 according to this embodiment is a railcar unit brake including a brake cylinder 2, a brake lever 4, a magnification ratio modulator 6, a shoe head 8, and a casing 10. For convenience of the description below, the orientation of the railcar braking device 1 is defined such that the brake cylinder 2 is provided toward the top, and the shoe head 8 is provided toward the bottom.

In the railcar braking device 1, a force originating the braking force is generated in the brake cylinder 2. The brake lever 4 is coupled to the brake cylinder 2 at the point of effort and is coupled to the shoe head 8 at the point of action. The brake lever 4 swivels in association with the driving of the brake cylinder 2. The magnification ratio modulator 6 is a mechanism to change the magnification ratio of the displacement of the brake lever 4 at the point of action relative to the displacement at the point of effort in accordance with the phase of the displacement at the point of effort. The shoe head 8 includes a brake shoe 12 and advances toward or recedes from a member subject to braking W in association with the swiveling motion of the brake lever 4. The braking force is generated as the shoe head 8 advances toward the member subject to braking W and presses the brake shoe 12 against the member subject to breaking W.

The member subject to braking W is, for example, a wheel. The casing 10 is hollow and houses the brake lever 4 and the magnification ratio modulator 6 inside. The brake cylinder 2 is affixed to the upper end of the casing 10, and the shoe head 8 is coupled to the brake lever 4 at the lower end of the casing 10. The configuration of the respective parts will be described in detail.

The brake cylinder 2 includes an air brake part 14, a spring brake part 16, a pressing bar 18, and a clutch mechanism 20. The base end of the pressing bar 18 extends in the brake cylinder 2, and the leading end of the pressing bar 18 extends in the casing 10. The leading end of the pressing bar 18 is connected to the brake lever 4. The brake cylinder 2 is configured to swivel the brake lever 4 by displacing the pressing bar 18 in the axial direction X (direction indicated by the arrow X) of the pressing bar 18, by using the air brake part 14 and the spring brake part 16. The air brake part 14 and the spring brake part 16 displace the common pressing bar 18 and generate forces originating braking forces in a manner mutually independent of each other.

The air brake part 14 is mainly used to generate a braking force directed to the purpose of decelerating the car while the car is traveling. In other words, the air brake part 14 mainly functions as a regular brake. The air brake part 14 includes a first piston 22, a first cylinder main body 24, and a return spring 26.

The first piston 22 is coupled to the base end of the pressing bar 18. The first cylinder main body 24 is bottomed and slidably houses the first piston 22. Further, the base end of the pressing bar 18 is housed in the first cylinder main body 24. Between a bottom 24a of the first cylinder main body 24 and the first piston 22 is provided a first chamber 28. In other words, the first chamber 28 defined by the first piston 22 and the inner surface of the first cylinder main body 24 is provided in the first cylinder main body 24. A first port 30 communicating with the first chamber 28 is provided in the bottom 24a of the first cylinder main body 24. Pressure air is supplied to the first chamber 28 via the first port 30. The pressure air in the first chamber 28 is discharged via the first port 30.

The return spring 26 is provided in a first space 32 in the first cylinder main body 24 opposite to the first chamber 28 across the first piston 22. The return spring 26 is sandwiched by the first piston 22 and a second piston 34 described later. The return spring 26 of this embodiment is comprised of a coil spring. The first space 32 is defined by the first piston 22 and a body part 24b of the first cylinder main body 24. Air in the casing 10 flows into the first space 32 via a gap between the members. In other words, the first space 32 communicates with the atmosphere.

When the air brake part 14 is not activated, the pressure air in the first chamber 28 is discharged. The first piston 22 is pressed by the biasing force of the return spring 26 in a direction in which the first chamber 28 is compressed, i.e., in a direction in which the base end of the pressing bar 18 advances into the first cylinder main body 24. For this reason, the pressing bar 18 is placed in a state in which it is displaced in a direction that the regular brake is not applied to the member subject to braking W. Hereinafter, this direction will be referred to as an counter-braking direction X1.

When a predetermined braking operation is performed, the pressure air is supplied to the first chamber 28. This causes the first piston 22 to be displaced against the biasing force of the return spring 26. The displacement of the first piston 22 displaces the pressing bar 18 coupled to the first piston 22 in a direction in which the pressing bar 18 advances from the first cylinder main body 24. Hereinafter, this direction will be referred to as a braking direction X2. In other words, the air brake part 14 uses the pressure of air supplied to the first chamber 28 to displace the first piston 22 and displace the pressing bar 18 coupled to the brake lever 4 in the braking direction X2. When a predetermined brake releasing operation is performed, the pressure air in the first chamber 28 is discharged. This causes the first piston 22 to be displaced by the biasing force of the return spring 26 in the counter-braking direction X1 to return to the initial state.

The spring brake part 16 is mainly used to generate a braking force for maintaining the parked state of the car being parked. In other words, the spring brake part 16 mainly functions as a parking brake. The spring brake part 16 includes a second piston 34, a second cylinder main body 36, and a parking brake spring 38.

The second piston 34 is provided coaxially with the first piston 22. The second piston 34 includes a through hole at the center, and the pressing bar 18 is inserted in the through hole. A predetermined gap is provided between the inner circumferential surface of the through hole and the pressing bar 18, and the clutch mechanism 20 is provided in the gap. The second piston 34 can be displaced in the axial direction X of the pressing bar 18. The second piston 34 is coupled to or decoupled from the pressing bar 18 depending on the state of the clutch mechanism 20.

The second cylinder main body 36 is tubular and slidably houses the second piston 34. The second cylinder main body 36 includes a body part 36b provided on the outer circumferential side of the body part 24b of the first cylinder main body 24. The second piston 34 is provided in the body part 36b and can abut the end of the body part 24b of the first cylinder main body 24 toward the brake lever 4. Further, the return spring 26 abuts the face of the second piston 34 facing the first piston 22. With this structure, the internal space of the brake cylinder 2 can be effectively used to reduce the size of the brake cylinder 2.

The end of the body part 36b toward the brake lever 4 is affixed to a wall part 10a of the casing 10. The wall part 10a is provided to face the member subject to braking W. Between the second piston 34 and the wall part 10a is provided an annular second chamber 40. In other words, the second chamber 40 is defined by the second piston 34, the second cylinder main body 36, and the casing 10. The first chamber 28 and the second chamber 40 are provided to sandwich the first space 32. Pressure air is supplied to the second chamber 40 via a second port (not shown). Further, the pressure air in the second chamber 40 is discharged via the second port.

The parking brake spring 38 is provided in the second cylinder main body 36 on the side opposite to the second chamber 40 across the second piston 34. The parking brake spring 38 of this embodiment is comprised of a coil spring. Further, the parking brake spring 38 is provided in a space defined by the body part 24b of the first cylinder main body 24 and the body part 36b of the second cylinder main body 36. Therefore, the parking brake spring 38 is positioned to be concentric with the first cylinder main body 24 and the second cylinder main body 36. By providing the parking brake spring 38 on the outer circumference of the first cylinder main body 24, the size of the brake cylinder 2 is reduced.

When the spring brake part 16 is not activated, the pressure air is supplied to the second chamber 40. The second piston 34 is displaced by the pressure of air supplied to the second chamber 40 in the counter-braking direction X1, compressing the parking brake spring 38. When a predetermined braking operation is performed, the pressure air in the second chamber 40 is discharged. This causes the second piston 34 to be displaced by the biasing force of the parking brake spring 38 in the braking direction X2. The displacement of the second piston 34 displaces the pressing bar 18 coupled to the second piston 34 in the braking direction X2. In other words, the spring brake part 16 uses the biasing force of the parking brake spring 38 generated by releasing the pressure of air supplied to the second chamber 40 to displace the second piston 34 and displace the pressing bar 18 in the braking direction X2.

The clutch mechanism 20 includes a clutch collar 42, a clutch collar spring 44, a spindle sleeve 46, a thrust bearing 48, a latch 50, and a latch lock pin 52. The second piston 34 of this embodiment includes at its center a clutch housing 54 that projects toward the first piston 22. The clutch mechanism 20 is housed in the clutch housing 54. The clutch housing 54 includes a through hole 54a in which the pressing bar 18 is inserted. The clutch housing 54 also includes a first wall part 56 extending in the axial direction X of the pressing bar 18 and forming the inner wall of the through hole 54a. The first wall part 56 includes a sloping part 56a that slopes such that the diameter of the through hole 54a grows larger towards the braking direction X2.

The clutch collar 42 is provided in the through hole 54a, and the pressing bar 18 is inserted in the clutch collar 42. The clutch collar 42 includes a sloping part 42a that slopes such that the diameter of the clutch collar 42 grows larger towards the braking direction X2. A bearing 58 and a bearing 60 are provided on both sides of the sloping part 42a in the axial direction X of the pressing bar 18. The bearing 58 is provided more towards the counter-braking direction X1 direction than the sloping part 42a, and the bearing 60 is provided more towards the braking direction X2 than the sloping part 42a. The clutch collar 42 is supported via the bearings 58 and 60 so as to be rotatable relative to the first wall part 56.

The clutch collar spring 44 is set between the bearing 58 positioned more towards the counter-braking direction X1 than the sloping part 42a and the circumferential end of the through hole 54a towards the counter-braking direction X1. The clutch collar spring 44 of this embodiment is comprised of a coil spring. The sloping part 42a of the clutch collar 42 and the sloping part 56a of the first wall part 56 are configured to be engaged with each other. The engagement between the sloping part 42a and the sloping part 56a prevents the rotation of the clutch collar 42 relative to the second piston 34. The sloping part 42a of the clutch collar 42 and the sloping part 56a of the first wall part 56 can be disengaged by the biasing force of the clutch collar spring 44. When the sloping part 42a and the sloping part 56a are disengaged, rotation of the clutch collar 42 relative to the second piston 34 is permitted.

The pressing bar 18 is inserted in the spindle sleeve 46. The spindle sleeve 46 slidably supports the pressing bar 18. The spindle sleeve 46 includes a small-diameter part 46a provided towards the counter-braking direction X1 and a large-diameter part 46b provided towards the braking direction X2. The small-diameter part 46a is interposed between the outer circumferential surface of the pressing bar 18 and the inner circumferential surface of the clutch collar 42. A thread groove (not shown) is provided on the outer circumferential surface of the small-diameter part 46a and the inner circumferential surface of the clutch collar 42. The spindle sleeve 46 and the clutch collar 42 are connected so as to be rotatable relative to each other due to the engagement of the respective thread grooves.

The large-diameter part 46b is connected to the end of the small-diameter part 46a towards the braking direction X2. A step 62 is provided on the inner circumferential surface of the large-diameter part 46b. The step 62 is comprised of a face that faces the braking direction X2. The inner diameter of the large-diameter part 46b more towards the braking direction X2 than the step 62 is larger than the inner diameter of the large-diameter part 46b more towards the counter-braking direction X1 than the step 62. Further, the pressing bar 18 includes a small-diameter part 18a provided towards the counter-braking direction X1 and a large-diameter part 18b provided towards the braking direction X2. The small-diameter part 18a of the pressing bar 18 is slidably inserted in the small-diameter part 46a of the spindle sleeve 46. The large-diameter part 18b of the pressing bar 18 is provided more towards the braking direction X2 than the step 62 of the spindle sleeve 46. The pressing bar 18 includes a step 64 that connects the small-diameter part 18a and the large-diameter part 18b. The step 64 is comprised of a face that faces the counter-braking direction X1. The step 62 of the spindle sleeve 46 and the step 64 of the pressing bar 18 face each other. The thrust bearing 48 is interposed between the two steps 62 and 64. The spindle sleeve 46 is supported by the thrust bearing 48 so as to be rotatable relative to the pressing bar 18.

The latch 50 is a mechanism to switch between a locked state and an unlocked state of the clutch mechanism 20. The latch 50 is inserted in a latch insertion hole 10b of the casing 10. The latch insertion hole 10b communicates the space outside the casing 10 with the space that houses the pressing bar 18. In the latch insertion hole 10b, the latch 50 can advance toward or recede from the large-diameter part 46b of the spindle sleeve 46. Figs. 1 and 2 show a state in which the latch 50 is at the advanced position.

Locking teeth 66 are provided at the end of the latch 50 toward the large-diameter part 46b. Latching teeth 68 are provided on the outer circumferential surface of the large-diameter part 46b. While the latch 50 is at the advanced position, the locking teeth 66 abut the latching teeth 68. This prevents the rotation of the spindle sleeve 46. When the latch 50 is displaced to the receded position, and the locking teeth 66 and the latching teeth 68 are disengaged, the rotation of the spindle sleeve 46 is permitted. The state in which the rotation of the spindle sleeve 46 is prevented is the locked state of the clutch mechanism 20, and the state in which the rotation of the spindle sleeve 46 is permitted is the unlocked state of the clutch mechanism 20.

A latch spring 70 is provided in the latch insertion hole 10b. The latch 50 is biased by the latch spring 70 to assume the advanced position. A manually-operated pull loop 72 is provided at the end of the latch 50 opposite to the locking teeth 66. By pulling the latch 50 via the manually-operated pull loop 72, the latch 50 is displaced to the receded position. Therefore, the locked state of the latch 50 can be canceled manually. By employing a structure such as this, the parking brake can be manually released when it is required to release the parking brake forcibly. For example, it is required to release the parking brake forcibly when a parking brake reducing pressure cannot be supplied to the second chamber 40 due to i) depletion of the pressure air source caused by leaving the car at rest for a long period of time, ii) cutting of a connecting hose for supplying a pressure to control the parking brake, iii) failure of the parking brake control electromagnetic valve, etc.

The latch lock pin 52 is housed in a pin insertion hole 10c of the casing 10 so as to be displaceable in the axial direction X. The pin insertion hole 10c extends in the axial direction X. The opening of the pin insertion hole 10c towards the counter-braking direction X1 faces a second wall part 74 of the clutch housing 54 extending in a direction intersecting the axial direction X. The opening of the pin insertion hole 10c towards the braking direction X2 communicates with the latch insertion hole 10b. The latch 50 includes a through hole 76 positioned in alignment with the pin insertion hole 10c when the latch 50 is at the advanced position and extending in the axial direction X. The latch 50 also includes a projection 78 in the through hole 76.

The latch lock pin 52 extends in the axial direction X in the pin insertion hole 10c. The end of the latch lock pin 52 towards the braking direction X2 is inserted in the through hole 76. The end is provided with a tapered part 80. The tapered part 80 abuts the projection 78 and is inclined such that the tapered part 80 raises the latch 50 as the latch lock pin 52 advances in the braking direction X2. The tapered part 80 functions as a wedge inserted between the projection 78 and the inner circumferential surface of the through hole 76. The end of the latch lock pin 52 towards the counter-braking direction X1 projects from the pin insertion hole 10c. Further, the end has a smaller diameter than the other portions, and a lock pin stop ring 82 is provided between the end and the inner circumferential surface of the pin insertion hole 10c. The lock pin stop ring 82 prevents the latch lock pin 52 from being dislodged from the pin insertion hole 10c due to the vibration occurring while the car is traveling. Further, the end of the latch lock pin 52 towards the counter-braking direction X1 abuts the second wall part 74 when the second piston 34 is displaced in the braking direction X2.

A stroke gauge 84 is provided on the wall part 10a of the casing 10. A tubular part 10d projecting in the braking direction X2 is provided on the face of the wall part 10a opposite to the brake cylinder 2. The stroke gauge 84 is inserted in the tubular part 10d, extends through the wall part 10a, and extends in the axial direction X. The end of the stroke gauge 84 towards the counter-braking direction X1 is provided in the second chamber 40, and the end of the stroke gauge 84 towards the braking direction X2 projects outside the casing 10 from the tubular part 10d. The stroke gauge 84 is displaceable in the axial direction X. When the end of the stroke gauge 84 towards the counter-braking direction X1 is pressed by the second piston 34 in the braking direction X2, the end of the stroke gauge 84 towards the braking direction X2 projects further from the tubular part 10d. With this configuration, it is possible to visually identify the working condition of the parking brake.

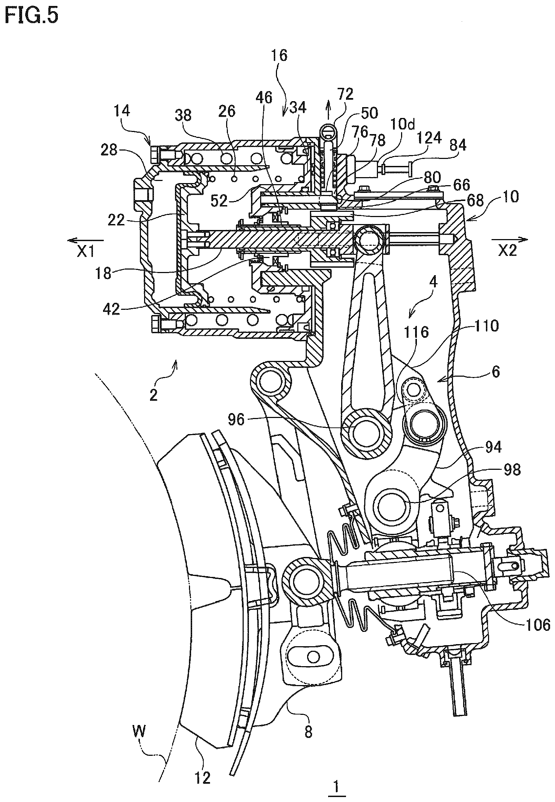

Further, the stroke gauge 84 includes an umbrella part 124 (see Fig. 5). The umbrella part 124 is provided at a position exposed outside the casing 10 when the manually-operated pull loop 72 is manipulated. The umbrella part 124 is configured to be closed in the tubular part 10d but to open when the umbrella part 124 is exposed outside the casing 10. This makes it possible to visually identify that the parking brake is manually released.

The wall part 10a of the casing 10 is provided with a first opening 86. In this embodiment, the first opening 86 is provided toward the top of the casing 10. The brake cylinder 2 is provided to cover the first opening 86, and the pressing bar 18 is inserted in the first opening 86. The spindle sleeve 46 is interposed between the inner circumferential surface of the first opening 86 and the pressing bar 18. The upper end of the brake lever 4 is coupled to the leading end of the pressing bar 18 positioned in the casing 10. Further, a guide rod 88 extending in the axial direction X and provided coaxially with the pressing bar 18 is inserted at the leading end of the pressing bar 18. The end of the guide rod 88 towards the counter-braking direction X1 is inserted in the pressing bar 18, and the end of the guide rod 88 towards the braking direction X2 is affixed in the casing 10.

The pressing bar 18 can be displaced in the axial direction X along the guide rod 88 in association with the displacement of the first piston 22 and the second piston 34. A point of effort pin 90 extending in a direction perpendicular to the axial direction X is provided at the leading end of the pressing bar 18. The upper end of the brake lever 4 is coupled to the point of effort pin 90. Therefore, the upper end of the brake lever 4 is rotatable around the point of effort pin 90 in association with the displacement of the pressing bar 18 in the axial direction X.

The brake lever 4 includes a first displaceable member 92 and a second displaceable member 94. The first displaceable member 92 is a member displaced when a force originating a braking force is received from the brake cylinder 2. The second displaceable member 94 is a member separate from the first displaceable member 92 and is a member displaced in response to the displacement of the first displaceable member 92.

In this embodiment, the first displaceable member 92 and the second displaceable member 94 are both comprised of a lever. The first displaceable member 92 extends vertically, and the upper end of the first displaceable member 92 is rotatably supported by the point of effort pin 90. The lower end of the first displaceable member 92 is rotatably supported by a first pivot point pin 96 affixed to the casing 10. The upper end of the first displaceable member 92 can be displaced in the axial direction X, with the lower end being the pivot point. The magnification ratio modulator 6 is provided toward the lower end of the first displaceable member 92. In this embodiment, the magnification ratio modulator 6 is provided at a position above the first pivot point pin 96 and distanced from the member subject to braking W.

The second displaceable member 94 extends vertically, and the upper end of the second displaceable member 94 is connected to the magnification ratio modulator 6. The middle part of the second displaceable member 94 is rotatably supported by a second pivot point pin 98 affixed to the casing 10. A bearing hole 100 is provided below the second pivot point pin 98 in the second displaceable member 94. A spherical bearing 102 is set in the bearing hole 100. A cylindrical sheath rod 104 is affixed to the inner ring of the spherical bearing 102. A support shaft 106 is housed in the sheath rod 104. The base of the support shaft 106 is housed in the sheath rod 104, and the end of the support shaft 106 projects outside the casing 10 from a second opening 108 of the casing 10. The leading end of the support shaft 106 projects toward the member subject to braking W, and the the shoe head 8 is coupled to the end of the support shaft 106.

The second displaceable member 94 can be rotated around the middle part. When the upper end of the second displaceable member 94 is rotated in a direction away from the member subject to braking W, the lower end of the second displaceable member 94 is rotated in a direction approaching the member subject to braking W. This causes the shoe head 8 to advance toward the member subject to braking W and press the brake shoe 12 against the member subject to braking W. As a result, a braking force is applied to the member subject to braking W. Therefore, the upper end of the first displaceable member 92 in the brake lever 4 represents a point of effort in which a force originating a braking force is input, and the lower end of the second displaceable member 94 represents a point of action that generates a braking force in the member subject to braking W.

The sheath rod 104 is cylindrical, and the support shaft 106 is inserted in the sheath rod 104. A thread groove (not shown) is provided on the inner circumferential surface of the sheath rod 104 and on the side surface of the support shaft 106. It is therefore possible to adjust the amount of projection of the support shaft 106 by rotating the support shaft 106 relative to the sheath rod 104.

In association with the displacement of the first displaceable member 92, a force is input from the magnification ratio modulator 6 to the upper end of the second displaceable member 94. The magnification ratio modulator 6 of this embodiment is comprised of a plate-shaped cam 110 affixed to the first displaceable member 92. The cam 110 has two faces with different curvatures on its surface in contact with the upper end of the other displaceable member, i.e., the second displaceable member 94. More specifically, the cam 110 includes a first face 112 and a second face 114. The first face 112 is a surface more sharply curved than the second face 114, and the second face 114 is a surface less sharply curved than the first face 112. Both the first face 112 and the second face 114 are curved faces.

As the upper end of the second displaceable member 94 is pressed by the first face 112 and the second face 114, the second displaceable member 94 is rotated around the second pivot point pin 98. The upper end of the second displaceable member 94 has a roller structure. The second displaceable member 94 is rotated around the second pivot point pin 98, rotating the roller along the first face 112 and the second face 114. In this embodiment, the first face 112 and the second face 114 are arranged at a position above the first pivot point pin 96 and away from the member subject to braking W.

The second displaceable member 94 is more displaced when pressed by the first face 112 than when pressed by the second face 114 and is less displaced when pressed by the second face 114 than when pressed by the first face 112. Therefore, the amount of displacement of the shoe head 8 coupled to the second displaceable member 94 is large when the second displaceable member 94 is pressed by the first face 112, and the amount of displacement is small when the second displaceable member 94 is pressed by the second face 114. Further, the first face 112 and the second face 114 are arranged such that the first face 112 presses the second displaceable member 94 before the second face 114, when the railcar braking device 1 is switched from the reduced braking state to the regular brake state or the parking brake state, i.e., when the pressing bar 18 leaves a state in which it is completely displaced in the counter-braking direction X1 and starts to be displaced in the braking direction X2.

The brake lever 4 undergoes the first displacement and the second displacement in the stated order at the point of effort when a state in which a braking force is not generated in the member subject to braking W (reduced braking state) is switched to a state in which a braking force is generated in the member subject to braking W (braking state). In other words, the upper end of the first displaceable member 92 undergoes the first displacement and then undergoes the second displacement. For example, the first displacement is a displacement that occurs since the brake lever 4 starts to be displaced until after a predetermined period of time, i.e., the initial displacement. Further, the second displacement is a displacement that occurs since the end of the first displacement until the end of the displacement of the brake lever 4, i.e., the later-stage displacement. The first displacement and the second displacement may be mutually continuous or discontinuous. Further, the first displacement may start after an interval of a time since the start of the displacement of the brake lever 4, and the second displacement may end before the end of the displacement of the brake lever 4.

Further, the first face 112 and the second face 114 of the cam 110 are positioned such that the first face 112 presses the second displaceable member 94 when the brake lever 4 is in the state of the first displacement, and the second face 114 presses the second displaceable member 94 when the brake lever 4 is in the state of the second displacement. In other words, the displacement of the brake lever 4 at the point of effort occurring while the first face 112 is pressing the second displaceable member 94 is the first displacement, and the displacement of the brake lever 4 at the point of effort occurring while the second face 114 is pressing the second displaceable member 94 is the second displacement.

Therefore, the magnification ratio modulator 6 can ensure that the brake lever 4 generates the braking force such that the magnification ratio of the displacement of the brake lever 4 at the point of action relative to the first displacement at the point of effort is greater than the magnification ratio of the displacement at the point of action relative to the second displacement at the point of effort subsequent to the first displacement. When the railcar braking device 1 is in the reduced braking state, the brake shoe 12 is distanced from the member subject to braking W. For this reason, the brake shoe 12 can be brought into contact with the member subject to braking W in a shorter period of time by configuring the amount of displacement of the shoe head 8 to be larger in the first displacement of the brake lever 4.

If the curve of the first face 112 is sharp, the force with which the shoe head 8 presses the brake shoe 12 against the member subject to braking W is weakened. However, the main purpose of the first displacement of the brake lever 4 is to bring the brake shoe 12 into contact with the member subject to braking W promptly so that reduction in the biasing force does not present any problem. In the second displacement of the brake lever 4 occurring after the first displacement, on the other hand, the brake shoe 12 can be pressed against the member subject to braking W more strongly by causing the less sharply curved second face 114 to press the second displaceable member 94. If the curve of the second face 114 is not sharp, the speed of displacement of the shoe head 8 will be slower accordingly. However, the brake shoe 12 has been brought into contact with the member subject to braking W as a result of the first displacement so that reduction in the speed of displacement does not present any problem. By providing the magnification ratio modulator 6 in the railcar braking device 1, therefore, it is possible to apply a large braking force to the member subject to braking W promptly. The sharpness of the curves of the first face 112 and the second face 114 can be defined in accordance with the magnitude of the gap between the member subject to braking W and the brake shoe 12 occurring when the railcar braking device 1 is in the reduced braking state, the amount of displacement of the brake shoe 12 required to occur after the brake shoe 12 is brought into contact with the member subject to braking W, etc.

The magnification ratio modulator 6 and the upper end of the second displaceable member 94 are coupled by a coupling plate 116. A coupling plate stop pin 118 is provided in the cam 110 forming the magnification ratio modulator 6. The upper end of the coupling plate 116 is rotatably coupled to the coupling plate stop pin 118. A roller pin 120 is provided at the upper end of the second displaceable member 94. The lower end of the coupling plate 116 is rotatably coupled to the roller pin 120.

A fastening hole 122 is provided in the casing 10. It is possible to fix the casing 10 to the carriage, etc. of the car by using a bolt (not shown) inserted in the fastening hole 122.

A description will now be given of the operation of the railcar braking device 1. When the railcar braking device 1 is in the reduced braking state as shown in Fig. 1, the braking control device (not shown) controls the pressure air supply source (not shown) not to supply the pressure air to the first chamber 28. The pressure air in the first chamber 28 is naturally discharged via the first port 30. Therefore, the first piston 22 is biased by the return spring 26 in the counter-braking direction X1 and is placed in a state in which the first piston 22 is in contact with the bottom of the first cylinder main body 24.

Meanwhile, the pressure air (parking brake reducing pressure) is supplied from the pressure air supply source to the second chamber 40. The pressure of air supplied to the second chamber 40 causes the second piston 34 to be placed in a state in which the second piston 34 is displaced in the counter-braking direction X1 against the biasing force of the parking brake spring 38. Therefore, the pressing bar 18 is also placed in a state in which the pressing bar 18 is displaced in the counter-braking direction X1, and the brake shoe 12 is distanced from the member subject to braking W.

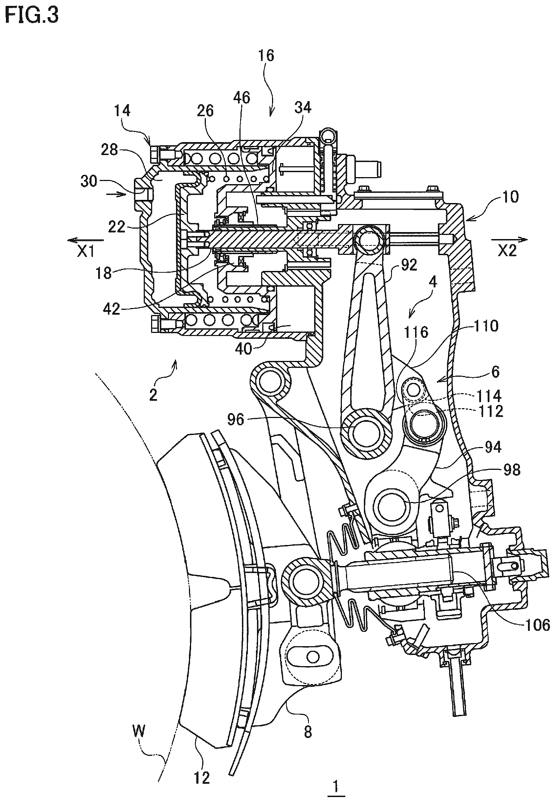

Fig. 3 is a cross-sectional view of the railcar braking device in the regular brake state. The regular brake state is a state in which the air brake part 14 applies a braking force to the member subject to braking W. When a regular brake command is issued, the pressure air (regular brake pressure) is supplied to the first chamber 28 via the first port 30 based on the control by the brake control device. By supplying the pressure air to the first chamber 28, the first piston 22 is displaced in the braking direction X2 against the biasing force of the return spring 26. In association with this, the pressing bar 18 is displaced in the braking direction X2. The state in which the parking brake reducing pressure is supplied is maintained in the second chamber 40. The pressing bar 18 slides in the spindle sleeve 46 and is displaced in the braking direction X2 so that the spindle sleeve 46, the clutch collar 42, and the second piston 34 are not displaced.

When the pressing bar 18 is displaced in the braking direction X2, the upper end of the first displaceable member 92 is rotated rightward in Fig. 3 around the first pivot point pin 96. This causes the cam 110 of the magnification ratio modulator 6 to press the upper end of the second displaceable member 94, the first face 112 pressing the upper end first and then the second face 114. When pressed by the cam 110, the upper end of the second displaceable member 94 is rotated rightward in Fig. 3 around the second pivot point pin 98. As a result, the shoe head 8 coupled to the lower end of the second displaceable member 94 via the support shaft 106 approaches the member subject to braking W, the brake shoe 12 is pressed against the member subject to braking W, and a braking force is applied to the member subject to braking W.

When a regular brake reduction command is issued, the pressure air in the first chamber 28 is discharged from the first port 30 based on the control by the brake control device. When the regular brake pressure is released, the biasing force of the return spring 26 displaces the first piston 22 and the pressing bar 18 in the counter-braking direction X1. In association with this, the upper end of the first displaceable member 92 is rotated leftward in Fig. 3. Further, since the upper end of the second displaceable member 94 is coupled to the cam 110 via the coupling plate 116, the upper end is rotated leftward in Fig. 3 in coordination with the first displaceable member 92. As a result, the shoe head 8 is distanced from the member subject to braking W, the brake shoe 12 is removed from the member subject to braking W, and the braking force is released.

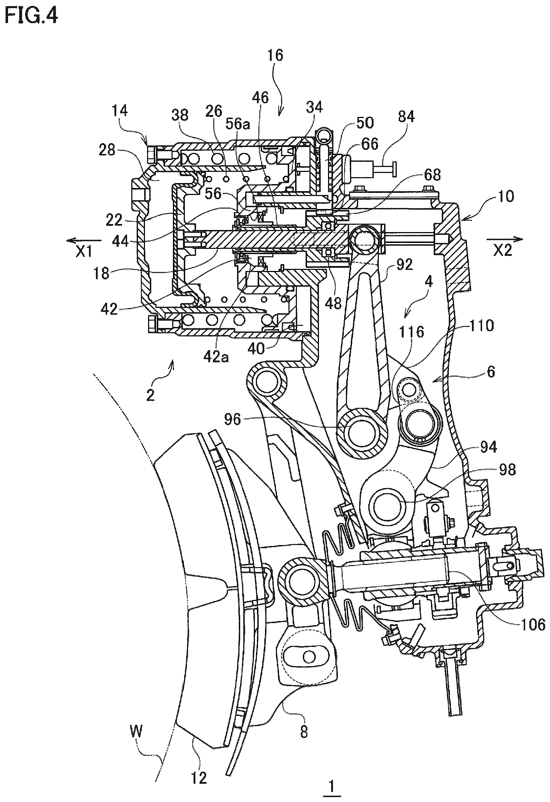

Fig. 4 is a cross-sectional view of the railcar braking device in the parking brake state. The parking brake state is a state in which the spring brake part 16 applies a braking force to the member subject to braking W. For example, the parking brake is activated after the regular brake is activated (see Fig. 3) and the railcar is completely stopped. When a parking brake command is issued, the pressure air (parking brake reducing pressure) is discharged from the second chamber 40 based on the control by the brake control device. When the pressure air is discharged from the second chamber 40, the biasing force of the parking brake spring 38 displaces the second piston 34 in the braking direction X2.

When the second piston 34 starts to be displaced in the braking direction X2, the sloping part 42a of the clutch collar 42 and the sloping part 56a of the first wall part 56 are engaged with each other. This prevents the rotation of the clutch collar 42. Further, the latching teeth 68 of the spindle sleeve 46 and the locking teeth 66 of the latch 50 are engaged with each other. This prevents the rotation of the spindle sleeve 46. Therefore, the clutch collar 42 and the spindle sleeve 46 are displaced in the braking direction X2 along with the second piston 34. The displacement of the spindle sleeve 46 in the braking direction X2 causes the pressing bar 18 to be pressed in the braking direction X2 via the thrust bearing 48. In other words, the biasing force of the parking brake spring 38 is transmitted to the pressing bar 18 via the second piston 34, the clutch collar 42, the spindle sleeve 46, and the thrust bearing 48, applying an additional braking force of the spring brake part 16 to the member subject to braking W.

Further, the displacement of the second piston 34 in the braking direction X2 presses the stroke gauge 84 in the braking direction X2. This causes the end of the stroke gauge 84 towards the braking direction X2 to project from the tubular part 10d. This makes it possible to visually identify the operating condition of the parking brake.

When a parking brake releasing command is issued while the regular brake is being released, the pressure air is supplied to the second chamber 40 based on the control of the brake control device. When the parking brake reducing pressure is supplied to the second chamber 40, the second piston 34 is displaced in the counter-braking direction X1 against the biasing force of the parking brake spring 38. When the second piston 34 is displaced in the counter-braking direction X1, the biasing force of the return spring 26 displaces the clutch collar 42, the spindle sleeve 46, and the pressing bar 18 in the counter-braking direction X1 as well. As a result, the upper end of the first displaceable member 92 and the upper end of the second displaceable member 94 are rotated leftward, the shoe head 8 is distanced from the member subject to braking W, the brake shoe 12 is removed from the member subject to braking W, and the braking force is released.

In association with the displacement of the second piston 34 in the counter-braking direction X1, the sloping part 42a of the clutch collar 42 and the sloping part 56a of the first wall part 56 are disengaged. The disengagement is assisted by the clutch collar spring 44. This allows the clutch collar 42 to be rotated and displaced in the counter-braking direction X1 to return to the initial position.

The regular brake pressure may or may not be supplied to the first chamber 28 when the spring brake part 16 is activated. In other words, the spring brake part 16 can apply the braking force to the member subject to braking W independently of the operation of the air brake part 14.

Fig. 5 is a cross-sectional view of the railcar braking device in the manually opened parking brake state. The manually opened parking brake state is a state in which the manually-operated pull loop 72 is pulled while the spring brake part 16 is being activated to release the braking force of the spring brake part 16. When the manually-operated pull loop 72 is pulled up, the latch 50 is removed from the spindle sleeve 46, and the locking teeth 66 and the latching teeth 68 are disengaged. This allows the spindle sleeve 46 to be rotated relative to the clutch collar 42. In other words, the clutch collar 42 and the spindle sleeve 46 can be displaced in the axial direction X relative to each other.

The biasing force of the parking brake spring 38 is applied to the second piston 34 and the clutch collar 42 to displace the second piston 34 and the clutch collar 42 in the braking direction X2. On the other hand, the biasing force of the return spring 26 is applied to the spindle sleeve 46 and the pressing bar 18 to displace the spindle sleeve 46 and the pressing bar 18 in the counter-braking direction X1. As the spindle sleeve 46 is rotated relative to the clutch collar 42 in this state, the displacement of the second piston 34 and the clutch collar 42 in the braking direction X2 and displacement of the spindle sleeve 46 and the pressing bar 18 in the counter-braking direction X1 are permitted.

As a result, the biasing force of the parking brake spring 38 applied to the pressing bar 18 is released so that the parking brake is released. The spindle sleeve 46 and the pressing bar 18 return to the initial position (reduced braking position) due to the biasing force of the return spring 26 so that the regular braking action can be exhibited even after the parking brake is opened.

As the second piston 34 is displaced in the braking direction X2 to complete the stroke, the latch lock pin 52 is pressed in the braking direction X2. This presses the latch lock pin 52 into the through hole 76 of the latch 50. When the latch lock pin 52 is pressed into the through hole 76, the tapered part 80 of the latch lock pin 52 is inserted between the inner circumferential surface of the through hole 76 and the projection 78. This maintains the state in which the latch 50 is pulled up.

In the case the regular brake is activated when the parking brake is manually opened, the first piston 22 is displaced in the braking direction X2 against the biasing force of the return spring 26 so that the spindle sleeve 46 and the pressing bar 18 cannot return to the initial position. If the latch 50 returns to the advance position in this state and the spindle sleeve 46 is locked accordingly, the pressing bar 18 cannot return to the reduced braking position even if the regular brake pressure is drawn from the first chamber 28. In contrast, failure to open the regular brake is prevented by using the latch lock pin 52 to maintain the state in which the latch 50 is pulled up.

Further, the stroke gauge 84 is also pressed in the braking direction X2. This causes the umbrella part 124 of the stroke gauge 84 to be exposed from the tubular part 10d and to open. As a result, it is known from outside that the parking brake is open.

The related-art unit brake is structured such that a spring brake part with a small stroke is used to apply the parking brake in a state in which the regular brake is applied by the air brake part to reduce the gap between the brake shoe and the member subject to braking. This has a disadvantage in that the sequence of operation of the regular brake and the parking brake is limited. Further, it is necessary to reduce the parking brake of the related-art unit brake by supplying the parking brake reducing pressure after the total brake pressure of the regular brake is applied. In contrast, the brake cylinder 2 of this embodiment is provided with the above-described structure so that the parking braking action provided by the spring brake part 16 can be exhibited or released irrespective of the regular braking action provided by the air brake part 14.

Further, the related-art unit brake is designed such that the parking brake is activated while the regular brake is being activated. Therefore, the ratio between the stroke of the air brake part and that of the spring brake part is set such that the air brake part has a larger stroke. For example, the ratio between the stroke of the air brake part and that of the spring brake part is 80:20. Meanwhile, the ratio difference between the stroke of the air brake part 14 and that of the spring brake part 16 is defined to be small in order to activate the regular brake and the parking brake independently. For example, the ratio between the stroke of the air brake part 14 and that of the spring brake part 16 is 50:50.

To inhibit reduction in the braking force of the regular brake due to the smaller relative stroke of the air brake part than that of the related-art unit brake, the railcar braking device 1 according to this embodiment is provided with the magnification ratio modulator 6. The magnification ratio modulator 6 configures the magnification ratio of the displacement of the brake lever 4 at the point of action relative to the first displacement at the point of effort to be greater than the magnification ratio of the displacement at the point of action relative to the second displacement at the point of effort subsequent to the first displacement. In other words, the magnification ratio modulator 6 functions as a stroke amplification mechanism.

By providing the magnification ratio modulator 6, the first displacement of the brake lever 4 can be turned into the displacement mainly directed to the purpose of reducing the gap between the brake shoe 12 and the member subject to braking W, and the second displacement of the brake lever 4 can be turned into the displacement mainly directed to the purpose of applying the braking force equivalent to that of the related art to the member subject to braking W. This inhibits reduction in the braking force of the regular brake associated with the smaller relative stroke of the air brake part. Further, after the gap between the brake shoe 12 and the member subject to braking W is reduced by the first displacement of the brake lever 4, i.e., after the play between the brake shoe 12 and the member subject to braking W is reduced, the second displacement of the brake lever 4 applies the braking force to the member subject to braking W. This advances the timing of occurrence of the braking force.

As described above, the railcar braking device 1 according to this embodiment includes: a brake lever 4 having a point of effort in which a force is input and a point of action that produces a braking force in a member subject to braking W, the point of effort going through a first displacement and a second displacement in the stated order when a braking force is generated; and a magnification ratio modulator 6 that configures a magnification ratio of a displacement at the point of action relative to the first displacement at the point of effort to be larger than a magnification ratio of a displacement at the point of action relative to the second displacement at the point of effort. This makes it possible to obtain a larger amount of displacement of the brake shoe 12 than in the case where the magnification ratio modulator 6 is not provided, given the same stroke of the piston. When an attempt is made to obtain the same amount of displacement of the brake shoe 12 using the braking device provided with the magnification ratio modulator 6 and the braking device not provided with the magnification ratio modulator 6, the stroke of the piston can be smaller in the braking device provided with the magnification ratio modulator 6. Accordingly, the size of the railcar braking device 1 can be reduced.

Further, the brake lever 4 includes a first displaceable member 92 displaced in response to a force originating a braking force and a second displaceable member 94 separate from the first displaceable member 92 and displaced in response to a displacement of the first displaceable member 92. By dividing the brake lever 4 into two pieces in this way, the amount of displacement of the brake shoe 12 obtained by a given stroke of the piston can be increased. Accordingly, the size of the railcar braking device is further reduced.

Further, the magnification ratio modulator 6 of this embodiment is comprised of a cam 110 affixed to the first displaceable member 92. Further, the cam 110 has two faces with different curvatures on its surface in contact with the second displaceable member 94. More specifically, the cam 110 has a first face 112 relatively more sharply curved and a second face 114 relatively less sharply curved. When the second displaceable member 94 is pressed by the first face 112, the second displaceable member 94 is more displaced than when pressed by the second face 114. When the second displaceable member 94 is pressed by the second face 114, the second displaceable member 94 is less displaced than when pressed by the first face 112. This simplifies the structure of the magnification ratio modulator 6.

Further, the railcar braking device 1 includes a brake cylinder 2 that generates a force originating a braking force. The brake cylinder 2 includes: a air brake part 14 that uses a pressure of air supplied to a first chamber 28 to displace a first piston 22 and displace a pressing bar 18 coupled to the brake lever 4; and a spring brake part 16 that uses a biasing force of a parking brake spring 38 generated by releasing a pressure of air supplied to a second chamber 40 to displace a second piston 34 and displace the pressing bar 18. The air brake part 14 generates a braking force directed to a purpose of decelerating a car while the car is traveling, and the spring brake part 16 generates a braking force for maintaining a parked state of the car being parked. In other words, the size of the railcar braking device 1 including the regular brake mechanism and the parking brake mechanism can be reduced according to this embodiment.

Further, the railcar braking device 1 is a railcar unit brake that includes; a brake lever 4 that has a point of effort in which a force is input and a point of action that generates a braking force in a member subject to braking W and that undergoes a first displacement and a second displacement in a stated order at the point of effort when the braking force is generated; a magnification ratio modulator 6 that configures a magnification ratio of a displacement at the point of action relative to the first displacement at the point of effort to be larger than a magnification ratio of a displacement at the point of action relative to the second displacement at the point of effort; a brake cylinder 2 that includes an air brake part 14 and a spring brake part 16 and that independently generates a braking force directed to a purpose of decelerating a car while the car is traveling by means of the air brake part 14 and a braking force for maintaining a parked state of the car being parked by means of the spring brake part 16, the air brake part 14 using a pressure of air supplied to a first chamber 28 to displace a first piston 22 and inputting a force to the point of effort of the brake lever 4, and the spring brake part 16 using a biasing force of a parking brake spring 38 generated by releasing a pressure of air supplied to a second chamber 40 to displace a second piston 34 provided coaxially with the first piston 22 and inputting a force to the point of effort of the brake lever 4; and a shoe head 8 that is coupled to the point of action of the brake lever 4 and is displaced by a force transmitted from the brake lever 4 to press the brake shoe 12 against the member subject to braking W. In this unit brake, the first piston 22 and the first cylinder main body 24 are provided coaxially with each other. This makes it possible to reduce the size of the brake cylinder 2. The air brake part 14 and the spring brake part 16 generate a force originating a braking force independent of each other. In this way, complicated steps for braking can be avoided.

### (Embodiment 2)

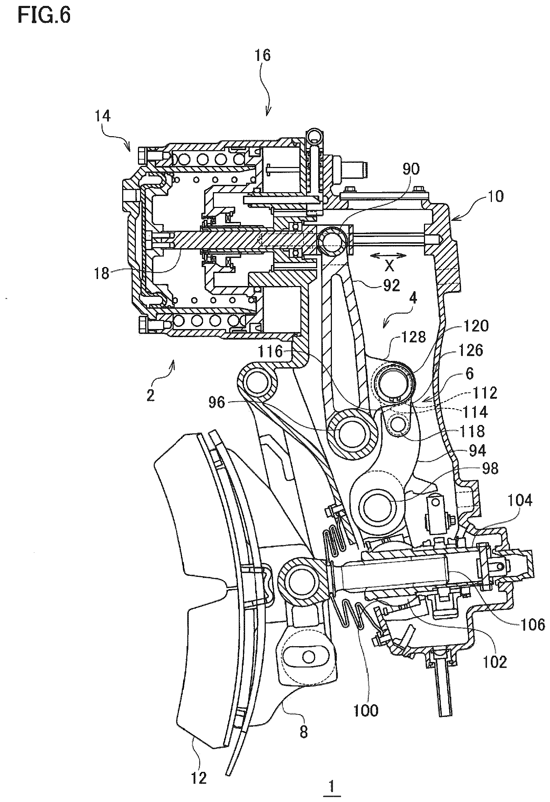

The device of embodiment 2 includes features generally common to those of embodiment 1 except for the structure of the brake lever. Those features of this embodiment that are different from those of embodiment 1 will mainly be described below. Common features will be described briefly, or a description thereof will be omitted. Fig. 6 is cross-sectional view of a railcar braking device according to embodiment 2. Fig. 6 shows the railcar braking device in a reduced braking state.

The brake lever 4 includes the first displaceable member 92 and the second displaceable member 94. In this embodiment, the first displaceable member 92 and the second displaceable member 94 are both comprised of a lever. The upper end of the first displaceable member 92 is rotatably supported by the point of effort pin 90. The lower end of the first displaceable member 92 is rotatably supported by the first pivot point pin 96. The upper end of the first displaceable member 92 can be displaced in the axial direction X, with the lower end being the pivot point.

The magnification ratio modulator 6 is provided at the upper end of the second displaceable member 94. The middle part of the second displaceable member 94 is rotatably supported by the second pivot point pin 98. The bearing hole 100 is provided below the second pivot point pin 98 in the second displaceable member 94. The spherical bearing 102, the sheath rod 104, and the support shaft 106 are provided in the bearing hole 100. The shoe head 8 is coupled to the leading end of the support shaft 106.

The magnification ratio modulator 6 is comprised of a cam 126 affixed to the second displaceable member 94. The cam 126 according to this embodiment is provided at the upper end of the second displaceable member 94 such that the cam 126 and the second displaceable member 94 form a unitary structure. The cam 126 has two faces with different curvatures on its surface in contact with the other displaceable member, i.e., the first displaceable member 92. More specifically, the cam 126 has the first face 112 relatively more sharply curved and the second face 114 relatively less sharply curved. Both the first face 112 and the second face 114 are curved faces.

The first displaceable member 92 has a projection for coupling 128 near the first pivot point pin 96, and the projection for coupling 128 is in contact with the cam 126. The reactive force produced by the first face 112 and the second face 114 of the cam 126 pressing the projection for coupling 128 of the first displaceable member 92 rotates the second displaceable member 94 around the second pivot point pin 98. The second displaceable member 94 is more displaced when the first displaceable member 92 is pressed by the first face 112 than when the first displaceable member 92 is pressed by the second face 114. The second displaceable member 94 is less displaced when the first displaceable member 92 is pressed by the second face 114 than when the first displaceable member 92 is pressed by the first face 112. The first face 112 and the second face 114 are arranged such that the first face 112 presses the projection for coupling 128 before the second face 114, when the railcar braking device 1 is switched from the reduced braking state to the regular brake state or the parking brake state.

The brake lever 4 undergoes the first displacement and the second displacement in the stated order at the point of effort when the railcar braking device 1 is switched from the reduced braking state to the braking state. Further, the first face 112 and the second face 114 are positioned such that the first face 112 presses the projection for coupling 128 when the brake lever 4 is in the state of the first displacement, and the second face 114 presses the projection for coupling 128 when the brake lever 4 is in the state of the second displacement. This allows the magnification ratio modulator 6 to configure the magnification ratio of the displacement of the brake lever 4 at the point of action relative to the first displacement at the point of effort to be greater than the magnification ratio of the displacement at the point of action relative to the second displacement at the point of effort.

The magnification ratio modulator 6 and the projection for coupling 128 of the first displaceable member 92 are coupled by the coupling plate 116. The coupling plate stop pin 118 is provided in the cam 126 forming the magnification ratio modulator 6, i.e., at the upper end of the second displaceable member 94. The lower end of the coupling plate 116 is rotatably coupled to the coupling plate stop pin 118. The roller pin 120 is provided in the projection for coupling 128. The upper end of the coupling plate 116 is rotatably coupled to the roller pin 120.

The displacement of the pressing bar 18 in the braking direction X2 causes the upper end of the first displaceable member 92 to be rotated rightward in Fig. 6 around the first pivot point pin 96. In association with this rotation, the projection for coupling 128 presses the first face 112 and the second face 114 of the cam 126. The projection for coupling 128 has a roller structure and is rotated around the first pivot point pin 96, rotating the roller along the first face 112 and the second face 114. The upper end of the second displaceable member 94 is rotated rightward in Fig. 6 around the second pivot point pin 98, by being pressed by the projection for coupling 128. Stated otherwise, the repulsive force produced as the first face 112 and the second face 114 press the projection for coupling 128 rotates the upper end of the second displaceable member 94 rightward. This rotates the support shaft 106 affixed to the lower end of the second displaceable member 94 leftward in Fig. 6. As a result, the shoe head 8 advances toward the member subject to braking W, the brake shoe 12 is pressed against the member subject to braking W, and a braking force is applied to the member subject to braking W.

When the pressing bar 18 is displaced in the counter-braking direction X1, the upper end of the first displaceable member 92 is rotated leftward in Fig. 6. Since the upper end of the second displaceable member 94 is coupled by the coupling plate 116 to the projection for coupling 128, the upper end is rotated leftward in Fig. 6 in coordination with the first displaceable member 92. As a result, the shoe head 8 is distanced from the member subject to braking W, the brake shoe 12 is removed from the member subject to braking W, and the braking force is released.

### (Embodiment 3)

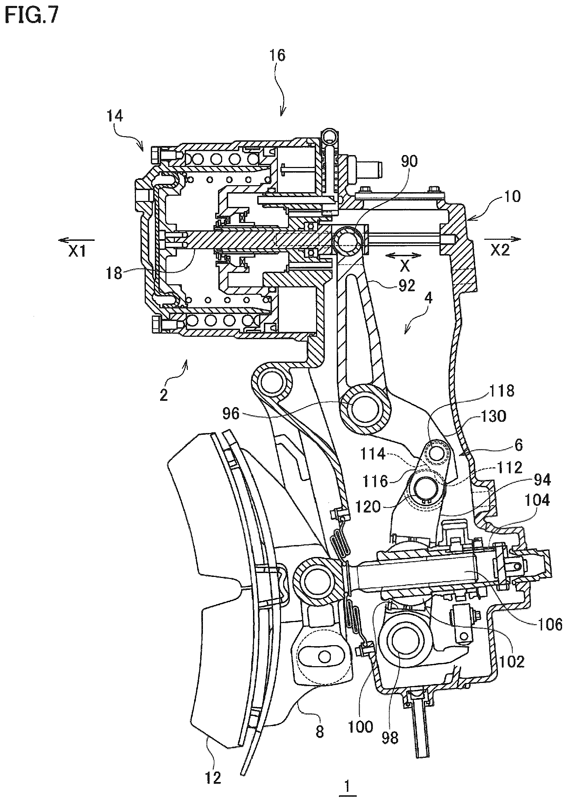

The device of embodiment 3 includes features generally common to those of embodiment 1 except for the structure of the brake lever. Those features of this embodiment that are different from those of embodiment 1 will mainly be described below. Common features will be described briefly, or a description thereof will be omitted. Fig. 7 is cross-sectional view of a railcar braking device according to embodiment 3. Fig. 7 shows the railcar braking device in a reduced braking state.

The brake lever 4 includes the first displaceable member 92 and the second displaceable member 94. In this embodiment, the first displaceable member 92 and the second displaceable member 94 are both comprised of a lever. The upper end of the first displaceable member 92 is rotatably supported by the point of effort pin 90. The lower end of the first displaceable member 92 is rotatably supported by the first pivot point pin 96. The upper end of the first displaceable member 92 can be displaced in the axial direction X, with the lower end being the pivot point. The magnification ratio modulator 6 is provided at the lower end of the first displaceable member 92.

The upper end of the second displaceable member 94 is connected to the magnification ratio modulator 6. The lower end of the second displaceable member 94 is rotatably supported by the second pivot point pin 98. The bearing hole 100 is provided in the middle part of the second displaceable member 94. The spherical bearing 102, the sheath rod 104, and the support shaft 106 are provided in the bearing hole 100. The shoe head 8 is coupled to the leading end of the support shaft 106. In other words, the second pivot point pin 98 supporting the rotation of the second displaceable member 94 is provided below the support shaft 106 at the center of the pressure against the brake shoe 12.

In association with the displacement of the first displaceable member 92, the force is input from the magnification ratio modulator 6 to the upper end of the second displaceable member 94. The magnification ratio modulator 6 is comprised of a plate-shaped cam 130 affixed to the first displaceable member 92. The cam 130 has two faces with different curvatures on its surface in contact with the second displaceable member 94. More specifically, the cam 130 has the first face 112 relatively more sharply curved and the second face 114 relatively less sharply curved. Both the first face 112 and the second face 114 are curved faces. The first face 112 and the second face 114 are provided at positions below the first pivot point pin 96 and more distanced from the member subject to braking W than the first pivot point pin 96. Further, the cam 130 is provided in contact with the upper end of the second displaceable member 94 at a position more distanced from the member subject to braking W than the second pivot point pin 98.

The displacement of the pressing bar 18 in the braking direction X2 causes the upper end of the first displaceable member 92 to be rotated rightward in Fig. 7 around the first pivot point pin 96. In association with this rotation, the first face 112 and the second face 114 of the cam 130 press the upper end of the second displaceable member 94 leftward in Fig. 7 (in a direction approaching the member subject to braking W). The upper end of the second displaceable member 94 is rotated leftward in Fig. 7 around the second pivot point pin 98, by being pressed by the first face 112 and the second face 114. The upper end of the second displaceable member 94 has a roller structure and is rotated around the second pivot point pin 98, rotating the roller along the first face 112 and the second face 114. In association with this, the support shaft 106 affixed to the middle part of the second displaceable member 94 is also displaced leftward. This causes the shoe head 8 to advance toward the member subject to braking W and press the brake shoe 12 against the member subject to braking W. As a result, a braking force is applied to the member subject to braking W.

The second displaceable member 94 is more displaced when pressed by the first face 112 than when pressed by the second face 114 and is less displaced when pressed by the second face 114 than when pressed by the first face 112. The first face 112 and the second face 114 are arranged such that the first face 112 presses the second displaceable member 94 before the second face 114, when the railcar braking device 1 is switched from the reduced braking state to the regular brake state or the parking brake state.

Further, the brake lever 4 undergoes the first displacement and the second displacement in the stated order at the point of effort when the railcar braking device 1 is switched from the reduced braking state to the braking state. Further, the first face 112 and the second face 114 are positioned such that the first face 112 presses the second displaceable member 94 when the brake lever 4 is in the state of the first displacement, and the second face 114 presses the second displaceable member 94 when the brake lever 4 is in the state of the second displacement. This allows the magnification ratio modulator 6 to configure the magnification ratio of the displacement of the brake lever 4 at the point of action relative to the first displacement at the point of effort to be greater than the magnification ratio of the displacement at the point of action relative to the second displacement at the point of effort.

The magnification ratio modulator 6 and the upper end of the second displaceable member 94 are coupled by the coupling plate 116. The coupling plate stop pin 118 is provided in the cam 130 forming the magnification ratio modulator 6. The upper end of the coupling plate 116 is rotatably coupled to the coupling plate stop pin 118. The roller pin 120 is provided at the upper end of the second displaceable member 94. The lower end of the coupling plate 116 is rotatably coupled to the roller pin 120. When the pressing bar 18 is displaced in the counter-braking direction X1, the upper end of the first displaceable member 92 is rotated leftward in Fig. 7. Since the upper end of the second displaceable member 94 is coupled by the coupling plate 116 to the cam 130, the upper end is rotated rightward in Fig. 7 in coordination with the first displaceable member 92. As a result, the shoe head 8 is distanced from the member subject to braking W, the brake shoe 12 is removed from the member subject to braking W, and the braking force is released.

### (Embodiment 4)

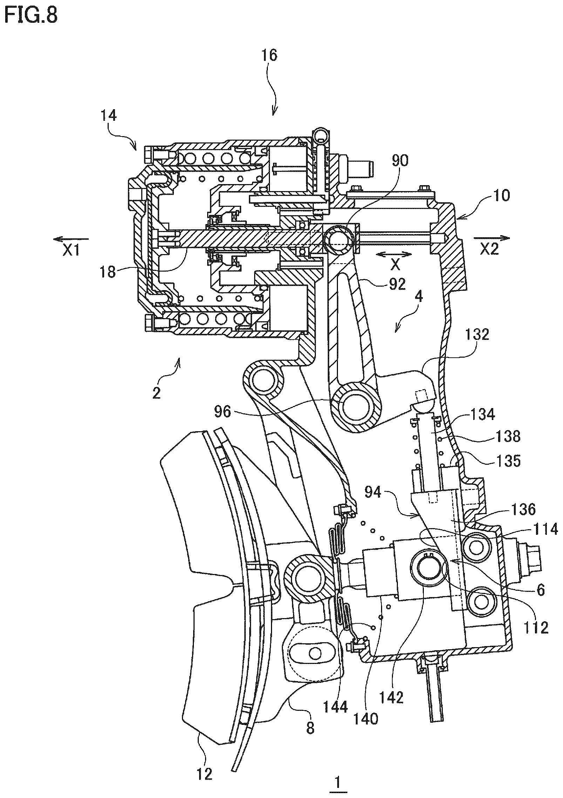

The device of embodiment 4 includes features generally common to those of embodiment 1 except for the structure of the brake lever. Those features of this embodiment that are different from those of embodiment 1 will mainly be described below. Common features will be described briefly, or a description thereof will be omitted. Fig. 8 is cross-sectional view of a railcar braking device according to embodiment 4. Fig. 8 shows the railcar braking device in a reduced braking state.

The brake lever 4 includes the first displaceable member 92 and the second displaceable member 94. In this embodiment, the first displaceable member 92 is comprised of a lever, and the second displaceable member 94 is comprised of a wedge member. The upper end of the first displaceable member 92 is rotatably supported by the point of effort pin 90. The lower end of the first displaceable member 92 is rotatably supported by the first pivot point pin 96. The upper end of the first displaceable member 92 can be displaced in the axial direction X, with the lower end being the pivot point. The lower end of the first displaceable member 92 is provided with a projection for pressing 132 that presses the second displaceable member 94 downward in association with the rotation of the first displaceable member 92.

The second displaceable member 94 includes a connecting pin 134, a wedge part 136, and a wedge return spring 138. The connecting pin 134 extends vertically, and the upper end of the connecting pin 134 is in contact with the projection for pressing 132. The connecting pin 134 is supported by a support part 135 affixed to the casing 10 so as to be displaceable vertically. The lower end of the connecting pin 134 is connected to the upper end of the wedge part 136. The wedge part 136 is shaped to be progressively thinner downward. The wedge part 136 has two faces having different curvatures toward the member subject to braking W. More specifically, the wedge part 136 has the first face 112 relatively more sharply curved and the second face 114 relatively less sharply curved. The first face 112 is a curved face, and the second face 114 is substantially a flat face.

The wedge return spring 138 is, for example, a coil spring and is provided on the outer circumference of the connecting pin 134. One end of the wedge return spring 138 is supported by the upper end of the connecting pin 134, and the other end is supported by the support part 135.

The wedge part 136 is connected to a support rod 140. The support rod 140 extends substantially in the axial direction X, and the base end thereof is inserted in the casing 10. The middle part of the support rod 140 is provided with a columnar roller 142 projecting from the side surface of the support rod 140. The wedge part 136 is connected to the support rod 140 such that the first face 112 and the second face 114 press the roller 142 toward the member subject to braking W. The shoe head 8 is coupled to the leading end of the support rod 140. A return spring 144 that biases the support rod 140 in a direction away from the member subject to braking W is provided between the support rod 140 and the casing 10.

The support rod 140 is more displaced when the roller 142 is pressed by the first face 112 than when the roller 142 is pressed by the second face 114 and is less displaced when the roller 142 is pressed by the second face 114 than when the roller 142 is pressed by the first face 112. Therefore, the amount of displacement of the shoe head 8 coupled to the support rod 140 is large when the roller 142 is pressed by the first face 112, and the amount of displacement is small when the roller 142 is pressed by the second face 114. In this embodiment, therefore, the magnification ratio modulator 6 is provided in the wedge part 136 of the second displaceable member 94. The first face 112 and the second face 114 are arranged such that the first face 112 presses the roller 142 before the second face 114, when the railcar braking device 1 is switched from the reduced braking state to the regular brake state or the parking brake state.

The brake lever 4 undergoes the first displacement and the second displacement in the stated order at the point of effort when the railcar braking device 1 is switched from the reduced braking state to the braking state. Further, the first face 112 and the second face 114 are positioned such that the first face 112 presses the roller 142 when the brake lever 4 is in the state of the first displacement, and the second face 114 presses the roller 142 when the brake lever 4 is in the state of the second displacement. This allows the magnification ratio modulator 6 to configure the magnification ratio of the displacement of the brake lever 4 at the point of action relative to the first displacement at the point of effort to be greater than the magnification ratio of the displacement at the point of action relative to the second displacement at the point of effort.

When the pressing bar 18 is displaced in the braking direction X2 and the projection for pressing 132 presses the connecting pin 134, the second displaceable member 94 is displaced downward against the biasing force of the wedge return spring 138. This causes the wedge part 136 to press the roller 142 so that the support rod 140 is displaced against the biasing force of the return spring 144. The roller 142 is displaced in a direction approaching the member subject to braking W as it is rotated along the first face 112 and the second face 114. As a result, the brake shoe 12 is pressed against the member subject to braking W. When the pressing bar 18 is displaced in the counter-braking direction X1, and the pressure to the connecting pin 134 from the projection for pressing 132 is released, the second displaceable member 94 is displaced upward by the biasing force of the wedge return spring 138. In association with this, the support rod 140 is displaced by the biasing force of the return spring 144 in a direction away from the member subject to braking W. As a result, the braking force applied to the member subject to braking W is released.

### (Embodiment 5)

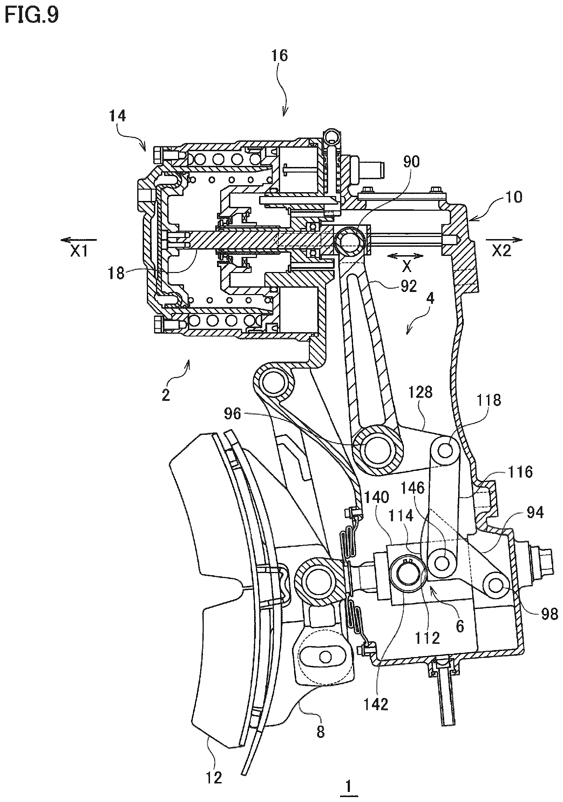

The device of embodiment 5 includes features generally common to those of embodiment 1 except for the structure of the brake lever. Those features of this embodiment that are different from those of embodiment 1 will mainly be described below. Common features will be described briefly, or a description thereof will be omitted. Fig. 9 is crosssectional view of a railcar braking device according to embodiment 5. Fig. 9 shows the railcar braking device in a reduced braking state.

The brake lever 4 includes the first displaceable member 92 and the second displaceable member 94. In this embodiment, the first displaceable member 92 and the second displaceable member 94 are both comprised of a lever. The upper end of the first displaceable member 92 is rotatably supported by the point of effort pin 90. The lower end of the first displaceable member 92 is rotatably supported by the first pivot point pin 96. The upper end of the first displaceable member 92 can be displaced in the axial direction X, with the lower end being the pivot point.

The second displaceable member 94 extends substantially in the axial direction X, and the first end thereof opposite to the member subject to braking W is rotatably supported by the second pivot point pin 98. The second end of the second displaceable member 94 toward the member subject to braking W has a fan shape, and the magnification ratio modulator 6 is provided at the second end. The magnification ratio modulator 6 is provided at the second end of the second displaceable member 94 such that the magnification ratio modulator 6 and the second displaceable member 94 form a unitary structure. The second end of the second displaceable member 94 is equivalent to a cam that forms the magnification ratio modulator 6. The second end of the second displaceable member 94 has two faces having different curvatures. More specifically, the second end has the first face 112 relatively more sharply curved and the second face 114 relatively less sharply curved. Both the first face 112 and the second face 114 are curved faces.

The second end of the second displaceable member 94 is connected to the support rod 140. The support rod 140 extends substantially in the axial direction X, and the base end thereof is inserted in the casing 10. The middle part of the support rod 140 is provided with the columnar roller 142 projecting from the side surface of the support rod 140. The second end of the second displaceable member 94 is connected to the support rod 140 such that the first face 112 and the second face 114 press the roller 142 toward the member subject to braking W. The shoe head 8 is coupled to the leading end of the support rod 140.

The support rod 140 is more displaced when the roller 142 is pressed by the first face 112 than when the roller 142 is pressed by the second face 114 and is less displaced when the roller 142 is pressed by the second face 114 than when the roller 142 is pressed by the first face 112. Therefore, the amount of displacement of the shoe head 8 coupled to the support rod 140 is large when the roller 142 is pressed by the first face 112, and the amount of displacement is small when the roller 142 is pressed by the second face 114. The first face 112 and the second face 114 are arranged such that the first face 112 presses the roller 142 before the second face 114, when the railcar braking device 1 is switched from the reduced braking state to the regular brake state or the parking brake state.

Further, the brake lever 4 undergoes the first displacement and the second displacement in the stated order at the point of effort when the railcar braking device 1 is switched from the reduced braking state to the braking state. Further, the first face 112 and the second face 114 are positioned such that the first face 112 presses the roller 142 when the brake lever 4 is in the state of the first displacement, and the second face 114 presses the roller 142 when the brake lever 4 is in the state of the second displacement. This allows the magnification ratio modulator 6 to configure the magnification ratio of the displacement of the brake lever 4 at the point of action relative to the first displacement at the point of effort to be greater than the magnification ratio of the displacement at the point of action relative to the second displacement at the point of effort.

The first displaceable member 92 has the projection for coupling 128 at the lower end thereof. The projection for coupling 128 and the second end of the second displaceable member 94 are coupled by the coupling plate 116. The coupling plate stop pin 118 is provided in the projection for coupling 128. The coupling plate stop pin 118 is provided at a position more distanced from the member subject to braking W than the first pivot point pin 96. The upper end of the coupling plate 116 is rotatably coupled to the coupling plate stop pin 118. A coupling plate stop pin 146 is provided at second end of the second displaceable member 94. The lower end of the coupling plate 116 is rotatably coupled to the coupling plate stop pin 146.

When the pressing bar 18 is displaced in the braking direction X2, the upper end of the first displaceable member 92 is rotated rightward in Fig. 9 around the first pivot point pin 96. In association with this rotation, the projection for coupling 128 presses the second end of the second displaceable member 94 downward via the coupling plate 116. This causes the second end of the second displaceable member 94 to be rotated downward in Fig. 9 around the second pivot point pin 98. When the second displaceable member 94 is rotated, the roller 142 is pressed by the first face 112 and the second face 114. The roller 142 is displaced in a direction approaching the member subject to braking W as it is rotated along the first face 112 and the second face 114. As a result, the brake shoe 12 is pressed against the member subject to braking W.

When the pressing bar 18 is displaced in the counter-braking direction X1, the upper end of the first displaceable member 92 is rotated leftward in Fig. 9. Since the second end of the second displaceable member 94 is coupled by the coupling plate 116 to the projection for coupling 128, the second end is rotated upward in Fig. 9 in coordination with the first displaceable member 92. When the second end of the second displaceable member 94 is displaced upward, and the pressure to the roller 142 from the second displaceable member 94 is released, the support rod 140 is displaced by the biasing force of a return spring (not shown) in a direction away from the member subject to braking W. As a result, the braking force applied to the member subject to braking W is released.

## Claims

1. A railcar braking device (1) that is a unit brake comprising:
a brake lever (4) having a point of effort in which a force is input and a point of action that produces a braking force in a member subject to braking (W), the point of effort going through a first displacement and a second displacement in the stated order when a braking force is generated; and
a magnification ratio modulator (6) that configures a magnification ratio of a displacement at the point of action relative to the first displacement at the point of effort to be larger than a magnification ratio of a displacement at the point of action relative to the second displacement at the point of effort;
a brake cylinder (2) that includes an air brake part (14) and a spring brake part (16) and that independently generates a braking force directed to a purpose of decelerating a car while the car is traveling by means of the air brake part (14) and a braking force for maintaining a parked state of the car being parked by means of the spring brake part (16), the air brake part (14) using a pressure of air supplied to a first chamber (28) to displace a first piston (22) and inputting a force to the point of effort of the brake lever (4), and the spring brake part (16) using a biasing force of a parking brake spring (38) generated by releasing a pressure of air supplied to a second chamber (40) to displace a second piston (34) provided coaxially with the first piston (22) and inputting a force to the point of effort of the brake lever (4); and a shoe head (8) that is coupled to the point of action of the brake lever (4) and is displaced by a force transmitted from the brake lever (4) to press the brake shoe (12) against the member subject to braking (W), **characterized in that** the brake lever (4) includes:
a first displaceable member (92) displaced in response to the force; and
a second displaceable member (94) separate from the first displaceable member (92) and displaced in response to a displacement of the first displaceable member (92), the first displaceable member (92) is coupled to the brake cylinder (2), the second displaceable member (94) is coupled to the shoe head (8), the first displaceable member (92) and the second displaceable member (94) are coupled to each other, the first displaceable member (92) is displaced when a force is input to the first displaceable member (92) from the brake cylinder (2), the second displaceable member (94) is displaced in response to a displacement of the first displaceable member (92), and the shoe head (8) is displaced in response to a displacement of the second displaceable member (94).

2. The railcar braking device (1) according to claim 1, **characterized in that** the magnification ratio modulator (6) is a cam (110, 126, 130) affixed to one of the first displaceable member (92) and the second displaceable member (94), and
the cam (110, 126, 130) has two faces having different curvatures on a surface of the cam (110, 126, 130) in contact with the other displaceable member.

3. The railcar braking device (1) according to claim 2, **characterized in that** the cam (110, 126, 130) has a first face (112) and a second face (114),
the first face (112) is more sharply curved than the second face (114), and the second face (114) is less sharply curved than the first face (112), and
when the other displaceable member is pressed by the first face (112), the second displaceable member (94) is more displaced than when the other displaceable member is pressed by the second face (114), and, when the other displaceable member is pressed by the second face (114), the second displaceable member (94) is less displaced than when the other displaceable member is pressed by the first face (112).

## Patentansprüche

1. Eine Schienenfahrzeug-Bremsvorrichtung (1), die eine Einheitenbremse ist, die umfasst:
einen Bremshebel (4), der einen Kraftangriffspunkt, in den eine Kraft eingegeben wird, und einem Wirkungspunkt, der eine Bremskraft in einem zu bremsenden Element (W) erzeugt, hat, der Kraftangriffspunkt durchläuft eine erste Verschiebung und eine zweite Verschiebung in der angegebenen Reihenfolge, wenn eine Bremskraft erzeugt wird; und
einen Verstärkungsverhältnis-Modulator (6), der ein Verstärkungsverhältnis einer Verschiebung am Wirkungspunkt relativ zur ersten Verschiebung am Kraftangriffspunkt konfiguriert, so dass es größer ist als ein Verstärkungsverhältnis einer Verschiebung am Wirkungspunkt relativ zur zweiten Verschiebung am Kraftangriffspunkt;
einen Bremszylinder (2), der einen Luftbremsteil (14) und einen Federbremsteil (16) beinhaltet und der unabhängig eine Bremskraft, die auf den Zweck der Verzögerung eines Fahrzeugs während der Fahrt gerichtet ist, mittels des Luftbremsteils (14) und eine Bremskraft zur Aufrechterhaltung eines geparkten Zustands des geparkten Fahrzeugs mittels des Federbremsteils (16) erzeugt, das Luftbremsteil (14) verwendet einen Luftdruck, der einer ersten Kammer (28) zugeführt ist, um einen ersten Kolben (22) zu verschieben und eine Kraft auf den Kraftangriffspunkt des Bremshebels (4) einzuleiten, und das Federbremsteil (16) verwendet eine Vorspannkraft einer Feststellbremsfeder (38), die durch Ablassen eines Luftdrucks zu einer zweiten Kammer (40) erzeugt wird, um einen zweiten Kolben (34) zu verschieben, der koaxial mit dem ersten Kolben (22) vorgesehen ist, und eine Kraft auf den Kraftangriffspunkt des Bremshebels (4) einleitet; und einen Backenkopf (8), der mit dem Wirkungspunkt des Bremshebels (4) gekoppelt ist und durch eine Kraft, die von dem Bremshebel (4) übertragen ist, verschoben wird, um die Bremsbacke (12) gegen das zu bremsende Element (W) zu drücken, **dadurch gekennzeichnet, dass** der Bremshebel (4) beinhaltet:
ein erstes verschiebbares Element (92), das in Reaktion auf die Kraft verschoben wird; und
ein zweites verschiebbares Element (94), das von dem ersten verschiebbaren Element (92) getrennt ist und in Reaktion auf eine Verschiebung des ersten verschiebbaren Elements (92) verschoben wird, das erste verschiebbare Element (92) ist mit dem Bremszylinder (2) gekoppelt, das zweite verschiebbare Element (94) ist mit dem Backenkopf (8) gekoppelt, das erste verschiebbare Element (92) und das zweite verschiebbare Element (94) sind miteinander gekoppelt, das erste verschiebbare Element (92) wird verschoben, wenn eine Kraft vom Bremszylinder (2) auf das erste verschiebbare Element (92) einwirkt, das zweite verschiebbare Element (94) wird als Reaktion auf eine Verschiebung des ersten verschiebbaren Elements (92) verschoben und der Backenkopf (8) wird als Reaktion auf eine Verschiebung des zweiten verschiebbaren Elements (94) verschoben wird.

2. Die Schienenfahrzeug-Bremsvorrichtung (1) gemäß Anspruch 1, **dadurch gekennzeichnet, dass** der Verstärkungsverhältnis-Modulator (6) ein Nocken (110, 126, 130) ist, der an einem von dem ersten verschiebbaren Element (92) und dem zweiten verschiebbaren Element (94) befestigt ist, und
der Nocken (110, 126, 130) zwei Flächen mit unterschiedlichen Krümmungen auf einer Oberfläche des Nockens (110, 126, 130) in Kontakt mit dem anderen verschiebbaren Element aufweist.

3. Die Schienenfahrzeug-Bremsvorrichtung (1) gemäß Anspruch 2, **dadurch gekennzeichnet, dass** der Nocken (110, 126, 130) eine erste Fläche (112) und eine zweite Fläche (114) aufweist,
die erste Fläche (112) stärker gekrümmt ist als die zweite Fläche (114), und die zweite Fläche (114) weniger stark gekrümmt ist als die erste Fläche (112), und
wenn das andere verschiebbare Element durch die erste Fläche (112) gedrückt wird, das zweite verschiebbare Element (94) mehr verschoben wird als wenn das andere verschiebbare Element durch die zweite Fläche (114) gedrückt wird, und wenn das andere verschiebbare Element durch die zweite Fläche (114) gedrückt wird, das zweite verschiebbare Element (94) weniger verschoben wird als wenn das andere verschiebbare Element durch die erste Fläche (112) gedrückt wird.

## Revendications

1. Dispositif de freinage de véhicule ferroviaire (1) qui est un frein élémentaire comprenant :
un levier de frein (4) comportant un point d'effort sur lequel est appliquée en entrée une force, ainsi qu'un point d'action qui génère une force de freinage sur un élément soumis à un freinage (W), le point d'effort passant par un premier déplacement et un second déplacement dans l'ordre mentionné lorsqu'une force de freinage est générée, et
un modulateur de rapport d'amplification (6) qui configure le rapport d'amplification d'un déplacement au point d'action par rapport au premier déplacement au point d'effort pour qu'il soit plus grand que le rapport d'amplification d'un déplacement au point d'action par rapport au second déplacement au point d'effort,
un vérin de frein (2) qui inclut un composant de frein à air (14) et un composant de frein à ressort (16) et qui génère indépendamment une force de freinage, au moyen du composant de frein à air (14), visant un but de décélération d'une voiture lorsque la voiture se déplace, ainsi qu'une force de freinage, au moyen du composant de frein à ressort (16), destinée à conserver l'état de stationnement de la voiture stationnée ; le composant de frein à air (14) utilisant la pression de l'air délivré à un premier compartiment (28) dans le but de déplacer un premier piston (22) et appliquant en entrée une force au point d'effort du levier de frein (4), et le composant de frein à ressort (16) utilisant une force de contrainte d'un ressort de frein de stationnement (38) générée par la libération de la pression de l'air délivré à un second compartiment (40) dans le but de déplacer un second piston (34) coaxial au premier piston (22) et appliquant en entrée une force au point d'effort du levier de frein (4) ; et une tête de sabot (8) qui est couplée au point d'action du levier de frein (4) et qui est déplacée grâce à une force transmise depuis le levier de frein (4) afin de comprimer le sabot de frein (12) contre l'élément soumis au freinage (W), **caractérisé en ce que** le levier de frein (4) inclut :
un premier élément déplaçable (92) déplacé en réponse à la force, est
un second élément déplaçable (94), séparé du premier élément déplaçable (92) et déplacé en réponse à un déplacement du premier élément déplaçable (92), le premier élément déplaçable (92) étant couplé au vérin de frein (2), le second élément déplaçable (94) étant couplé à la tête de sabot (8), le premier élément déplaçable (92) et le second élément déplaçable (94) étant couplés l'un à l'autre, le premier élément déplaçable (92) étant déplacé lorsqu'une force est appliquée sur le premier élément déplaçable (92) par le vérin de frein (2), le second élément déplaçable (94) étant déplacé en réponse à un déplacement du premier élément déplaçable (92), et la tête de sabot (8) étant déplacée en réponse à un déplacement du second élément déplaçable (94).

2. Dispositif de freinage de véhicule ferroviaire (1) selon la revendication 1, **caractérisé en ce que** le modulateur de rapport d'amplification (6) est une came (110, 126, 130) fixée sur l'un du premier élément déplaçable (92) et du second élément déplaçable (94), et **en ce que** la came (110, 126, 130) comporte deux faces présentant des rayons de courbure différents sur une surface de la came (110, 126, 130) en contact avec l'autre élément déplaçable.

3. Dispositif de freinage de véhicule ferroviaire (1) selon la revendication 2, **caractérisé en ce que** la came (110, 126, 130) possède une première face (112) et une seconde face (114),
la première face (112) est incurvée plus fortement que la seconde face (114) et la seconde face (114) est incurvée moins fortement que la première face (112), et
lorsque l'autre élément déplaçable est comprimé par la première face (112), le second élément déplaçable (94) est plus déplacé que lorsque l'autre élément déplaçable est comprimé par la seconde face (114), et, lorsque l'autre élément déplaçable est comprimé par la seconde face (114), le second élément déplaçable (94) est moins déplacé que lorsque l'autre élément déplaçable est comprimé par la première face (112).
